# EUROPÄISCHE PATENTSCHRIFT

(11) **EP 2 906 643 B1**
(45) Veröffentlichungstag und Bekanntmachung des Hinweises auf die Patenterteilung: **09.11.2016**
(21) Anmeldenummer: 13758759.8
(22) Anmeldetag: 04.09.2013
(51) Int. Cl.: C09D 11/037

(54) **DISPERGIERMITTEL AUS NACHWACHSENDEN ROHSTOFFEN FÜR BINDEMITTELFREIE PIGMENTPRÄPARATIONEN**
DISPERSING AGENT FROM RENEWABLE RAW MATERIALS FOR BINDING AGENT-FREE PIGMENT PREPARATIONS
AGENTS DISPERSANTS TIRÉS DE MATIÈRES PREMIÈRES RENOUVELABLES POUR DES PRÉPARATIONS PIGMENTAIRES EXEMPTES DE LIANT

(30) Priorität: 09.10.2012 DE 102012019786
(43) Veröffentlichungstag der Anmeldung: 19.08.2015
(73) Patentinhaber: Clariant International Ltd, 4132 Muttenz (CH)
(72) Erfinder: AHRENS, Hendrik, 65830 Kriftel (DE)
(74) Vertreter: Mikulecky, Klaus
(86) Internationale Anmeldenummer: PCT/EP2013/002652
(87) Internationale Veröffentlichungsnummer: WO 2014/056563

(56) Entgegenhaltungen:
- WO-A1-2010/056833
- GB-A- 938 475
- GB-A- 2 458 939

## Beschreibung

Gegenstand der vorliegenden Erfindung sind wässrige, bindemittelfreie Pigmentpräparationen, die Phosphatide und Fettsäurealkanolamidethoxylate enthalten, sowie ihre Verwendung zum Färben von makromolekularen Materialien aller Art, wie beispielsweise Fasermaterialien, Papiermassefärbung, Beschichtungsstoffe, Lacke, Farben und ihre Verwendung zum Bedrucken von zweidimensionalen Flächengebilden wie beispielsweise Papier, Kartonagen, Kunststoff, Textilien und Leder.

Nach dem Stand der Technik werden eine Vielzahl von Verbindungen als geeignete Netz- und Dispergiermittel vorgeschlagen, die üblicherweise aus petrochemischen Rohstoffen hergestellt werden. In jüngster Zeit werden alternative Syntheserouten und Rohstoffquellen gesucht, die ressourcenschonende Netz- und Dispergiermittel zugänglich machen und nachwachsende, pflanzliche Rohstoffquellen verwenden.

Nach dem Stand der Technik sind bereits eine Vielzahl von Verbindungen bekannt, die aus nachwachsenden Rohstoffquellen zugänglich sind und als Netz- und Dispergiermittel für Pigmentpräparationen, Farben und Lacke Verwendung finden. Durch Verseifen natürlicher Fett, Öle, Wachse und Harze sind natürliche, ionische Verbindungen wie Natursäuren und Phosphatide zugänglich, die als Dispergiermittel für Pigmente Verwendung finden können.

US-1863331 beschreibt Pigmentpasten, die Ammoniumoleat als Dispergiermittel enthalten.

US-1986029 beschreibt Leinsamenfettsäuren als Hilfsmittel für die Herstellung von lösemittelhaltigen Pigmentpräparationen.

US-2043397 beschreibt Rizinusöl als Dispergiermittel in Offsetdruckpasten.

US-2068066 beschreibt natürliche Fettsäuren wie Stearinsäure, Ölsäure, Palmitinsäure und Laurinsäure zur Oberflächenbehandlung von anorganischen Pigmenten.

US-2130554 beschreibt Lecithin als Dispergiermittel für Pigmentsuspensionen in organischen Lösemitteln.

US-2271409 beschreibt Phosphatide wie beispielsweise Soyaöllecithin als Dispergiermittel in Seifen.

US 2294381 beschreibt Naphtholsäure zur Oberflächenbehandlung von Pigmenten.

US-2337597 beschreibt Tanninsäure als Dispergiermittel für Tonmineralpigmente.

US-2342641 beschreibt Tanninsäure als Dispergiermittel in Pigmentfärbeverfahren.

US-2965510 beschreibt Kolophoniumharzsäure als Dispergiermittel für Rußpigmente.

WO-2010/056833 lehrt Zusammensetzungen, die Lecithin und nichtionische Tenside enthalten.

Neben ionischen sind auch nichtionische Verbindungen bekannt, die aus nachwachsenden Rohstoffen gewonnen werden können. Fettalkoholethoxylaten werden durch Umsetzung von Fettalkoholen mit Ethylenoxid dargestellt. Ullmanns's Enzyklopädie für industrielle Chemie (Vol. 14, Seiten 119 - 123, 2012 Wiley-VCH Verlag GmbH & Co. KGaA, Weinheim) lehrt die Herstellung von Fettalkoholen aus natürlichen Fettsäuren. Lippits und Nieuwenhuys lehren in ihrer Veröffentlichung "Direct conversion of ethanol into ethylene oxide on copper and silver nanoparticles: Effect of addition of CeOx and Li2O" (Catalysis Today, Volume 154, Issues 1-2, 1 September 2010, Pages 127 - 132, erschienen im Elsevier Verlag) die Herstellung von Ethylenoxid aus Ethanol. Ethanol wird technisch durch Fermentation von Rüben- oder Rohrzucker gewonnen. Somit sind auf diesem Syntheseweg auch biobasierte Fettalkoholethoxylate zugänglich, die als nichtionische Dispergiermittel für Pigmente verwendet werden können.

Ein weiterer biobasierter Rohstoff ist Glycerin, das durch Verseifung von natürlichen Fetten und Ölen gewonnen wird.

Weitere nichtionische Verbindungen auf Basis nachwachsender Rohstoffe sind zuckerbasierte Tenside.

DE-3240892 beschreibt Carbonsäureester von Hexiten als hochwertige Emulgatoren und Gleitmittel.

WO-95/022313 beschreibt Emulgatoren auf Basis von Zuckerbausteinen, Alkylresten und Polyglycerineinheiten für Kosmetikformulierungen, welche aus nachwachsenden Rohstoffen gewonnen werden.

WO-90/03977 und WO-90/07516 beschreiben die Herstellung von Alkyloligoglycosiden.

Nachteil der bekannten Verbindungen aus nachwachsenden Rohstoffquellen ist oftmals die schlechtere Dispergierwirkung in Pigmentpräparationen, Lacken und Farben im Vergleich zu Verbindungen auf petrochemischer Basis. So haben natürliche Säuren eine schlechtere Dispergierwirkung, weil sie schwerlösliche Erdalkalisalze bilden, die in Wasser ausfällen und ihre Dispergierwirkung ist stark pH-abhängig, da natürliche Säuren unter sauren Bedingungen protoniert werden und ihren ionischen Charakter verlieren.

Der vorliegenden Erfindung lag die Aufgabe zugrunde, Netz- und Dispergiermittel aufzufinden, die aus nachwachsenden Rohstoffen hergestellt werden und mit deren Hilfe stabile und fließfähige, wässrige Pigmentpräparationen herzustellen, die über einen längeren Zeitraum keine Sedimentation der verwendeten Pigmente aufzeigen, und mit denen sich wässrige und lösemittelhaltige Farben, Lacke und Lasuren gleichermaßen einfärben lassen. Beim Abtönen von wässrigen Lacken und Farben, insbesondere Dispersionsfarben, Silikatdispersionsfarben und wässrigen Silikonharzfarben sollten die erfindungsgemäßen Pigmentpräparationen keine Rubout-Probleme zeigen.

Weiterhin sollen die wässrigen Pigmentpräparationen auch mit lösemittelhaltigen Lacken kompatibel sein, sich homogen durch Mischen, Rühren oder Schütteln im Lack verteilen lassen und bei Streichen oder Rollen auf Oberflächen ein ruhiges, gleichmäßiges Farbbild ergeben. Auch für die Kompatibilität der wässrigen Pigmentpräparationen dient der Rubout-Test, der in der in US-3840383 beschriebenen Weise durchgeführt wird. Um die Verträglichkeit mit einer möglichst großen Anzahl von Farben und Lacken zu ermöglichen, wird auf die Verwendung von Bindemitteln bei der Herstellung der erfindungsgemäßen Pigmentpräparationen verzichtet. Bindemittel sind Polymere oder Harze, die in einem geeigneten Lösemittel gelöst sind und physikalisch, chemisch, thermisch, oxidativ oder strahlengehärtet trocknen. Während des Trocknungsvorgangs verfilmen die Polymere oder Harze und dienen als Bindemittel für die verwendeten Pigmente und Füllstoffe eines Beschichtungsstoffes. Da Bindemittel auch über dispergierende Eigenschaften verfügen können, verwendet man sie gerne in Kombination mit niedermolekularen Netz- und Dispergiermitteln für die Herstellung von Pigmentpräparationen. Nachteil der Verwendung eines Bindemittels ist die Einschränkung der Verwendbarkeit der Pigmentpräparation, da sich nur ähnliche Bindemittel mit einander kombinierbar sind.

Eine weitere Aufgabe der Erfindung war es, wässrige Pigmentpräparationen mit geringem humantoxikologischen Potenzial und geringer Umweltgefährdung bereit zu stellen. Leicht flüchtige organische Verbindungen mit einem Siedepunkt von < 250 °C (VOC Gehalte) sollen den wässrigen Pigmentpräparationen nicht explizit zugesetzt werden.

Überraschenderweise wurde gefunden, dass Pigmentpräparationen, die Phosphatide der Formel I in Kombination mit Fettsäurealkanolamidethoxylaten enthalten, diese Aufgabe erfüllen.

Gegenstand der Erfindung sind daher wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Phosphatids der Formel (I), 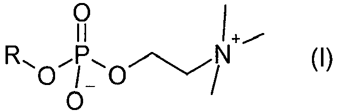 worin
   R ein aliphatischer Rest ist, der insgesamt bis zu 50 Atome umfasst, wobei diese ausgewählt sind aus Kohlenstoff-, Wasserstoff- und Sauerstoffatomen, und gegebenenfalls Stickstoff- und Schwefelatomen,
(C) 0,01 bis 12,0 Gew.-% eines Fettsäurealkanolamidethoxylates der Formel (II) 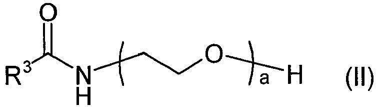 worin
   a für eine ganze Zahl von 3 bis 50
   R³ für C₇- bis C₂₁-Alkyl oder -Alkenyl
   stehen,
   und
   (G) Wasser.

Die erfindungsgemäße Pigmentpräparation kann darüber hinaus gegebenenfalls einen oder mehrere der Bestandteile
(D) 0, vorzugsweise 0,01 bis 8,0 % Tonmineralverdicker ausgewählt aus natürlichen oder alkalisch aktivierten Montmorrilonit-Schichtsilikatmineralien,
(E) 0, vorzugsweise 0,01 bis 20,0 % anorganische Füllstoffe und
(F) 0, vorzugsweise 0,01 bis 30 Gew.-% weitere, für die Herstellung von wässrigen Pigmentpräparationen übliche Hilfsmittel wie zusätzliche Netzmittel, Feuchthaltemittel, Lösemittel, Entschäumer, Rheologieadditive, Konservierungsmittel, Puffersubstanzen und pH-Regulatoren

### enthalten.

Die erfindungsgemäßen Pigmentpräparationen sind scherbeständig, eintrockenbeständig, lagerbeständig, schäumen bei der Applikation nicht oder nur wenig und verfügen über eine hervorragende Rheologie.

Die Komponente (A) der erfindungsgemäßen Pigmentpräparationen ist vorzugsweise ein feinteiliges, organisches oder anorganisches Weiß- oder Buntpigment oder ein Gemisch verschiedener Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Die Komponente (B) der erfindungsgemäßen Pigmentpräparationen ist ein Phosphatid oder Phospholipid. In einer besonderen Ausführung ist Komponente (B) ein Phosphatidylcholin der Formel (III), 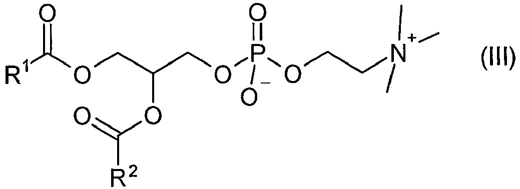 worin
R¹ ein linearer, gesättigter oder ungesättigter aliphatischer C₇ bis C₁₇-Rest,
R² ein linearer, gesättigter oder ungesättigter aliphatischer C₈ bis C₁₇-Rest gleich oder verschieden von R¹ ist.
R¹ und R² sind vorzugsweise Alkyl- oder Alkenylreste.

Phosphatidylcholin ist wesentlicher Bestandteil von Ei- und Soyalecithin und setzt sich aus Fettsäuren, Glycerin, Phosphorsäure und Cholin zusammen. Die enthaltenen Fettsäuren sind Laurinsäure, Myristinsäure, Palmitinsäure, Stearinsäure, Ölsäure, Linolsäure und Linolensäure, hauptsächlich Palmitinsäure und Ölsäure. Sojalecithin ist im Öl der Sojabohne enthalten. Durch Reinigen und Mahlen der Sojabohne und durch Extraktionsverfahren wird das Sojarohöl gewonnen, welches ca. 2 % Lecithin enthält. Durch weitere Extraktionsprozesse wird ein Sojalecithin mit einer Reinheit von 60 - 70 % gewonnen.

Komponente (C) sind ethoxylierte Fettsäureethanolamide der (Formel II).

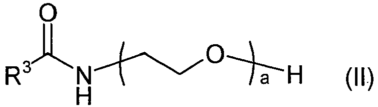

Ethoxylierte Fettsäureethanolamide werden vorzugsweise durch Umsetzen von natürlichen Fettsäuren mit Ethanolamin zum Fettsäureethanolamid und anschließender Anlagerung von Ethylenoxid mittels alkalischer Katalysatoren wie Natrium- oder Kaliummethylat hergestellt. R³ ist vorzugsweise eine Alkyl- oder Alkenylgruppe mit 11 bis 19 Kohlenstoffatomen, wobei auch mehr als eine Doppelbindung enthalten sein kann. a ist eine ganze Zahl von 1 bis 100 und vorzugsweise mindestens gleich 3, insbesondere mindestens gleich 4. Ausgehend vom Fettsäureethanolamid wird Ethylenoxid vorzugsweise an die endständige Hydroxylgruppe addiert. Die Addition von Ethylenoxid an den Stickstoff der Säureamidgruppe erfolgt untergeordnet in einer Nebenreaktion, so dass am Stickstoff untergeordnet auch 2 Polyethylenglykoletherreste gebunden sind. Geeignete Fettsäuren für die Herstellung der Fettsäureethanolamide sind Caprinsäure, Laurinsäure, Myristinsäure, Palmitinsäuren, Stearinsäure, Arachinsäure, Behensäure, Palimtoelinsäure, Ölsäure und natürlich vorkommende Mischungen wie Palmkernölfettsäure, Rapsölfettsäure, Sonnenblumenölfettsäure, Sojaölfettsäure oder Harzsäuren wie Tallölfettsäure. Die als Rohstoff verwendeten Fettsäuren können gesättigt und ungesättigt vorliegen.

Die Komponente (D) ist ein Tonmineralverdicker auf Basis von natürlichen oder alkalisch aktivierten Montmorrilonit-Schichtsilikatmineralien. Montmorrilonit ist der wesentliche Bestandteil von Bentonit und besitzt ein hohes Ionenaustauschvermögen. Bei Zugabe von Wasser dehnt sich das Mineral um ein vielfaches der Ursprungsgröße aus, wodurch die sich die Viskosität der wässrigen Dispersion erhöht. Montmorrilonit als Tonmineralverdicker kann der erfindungsgemäßen Pigmentpräparation zugesetzt werden, um das Absetzen von organischen und anorganischen Pigmenten und Füllstoffen und die Synerese, das heißt die Bildung einer zweiten Phase mit unterschiedlicher Zusammensetzung, zu verlangsamen oder zu verhindern.

Die Komponente (E) ist ein anorganischer Füllstoff, der den erfindungsgemäßen Pigmentpräparationen zugesetzt werden kann, um deren Dichte zu erhöhen und das Fließverhalten zu verändern. Bei volumetrischer Dosierung und geringer Pigmentkonzentration oder leichten organischen Pigmenten kann es möglich sein, dass sich die Pigmentpräparation in den Dosiergeräten nur schlecht dosieren lässt, weil die Gravitationskraft nicht ausreicht, um die flüssige Pigmentpräparation in das Farbengebinde zu entleeren. In anderen Fällen ist die Viskosität der Pigmentpräparationen bei niedrigen Pigmentkonzentrationen zu niedrig, was zu einem Nachtropfen führt. In beiden Fällen können den erfindungsgemäßen Pigmentpräparationen farblose anorganische Füllstoffe zugesetzt werden, um die Dichte der Pigmentpräparation zu erhöhen und das Fließverhalten zu verbessern. Geeignete Füllstoffe sind Calciumcarbonate wie natürlich vorkommende Kreide und gefälltes Calciumcarbonat, Dolomit, natürliches Siliciumdioxid (Quarzmehl), pyrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommendes Schwerspate und gefälltes Blanc Fix.

Die Komponenten (F) sind weitere für die Herstellung von wässrigen Pigmentpräparationen übliche Hilfsmittel wie zusätzliche Feuchthaltemittel, Lösemittel, Entschäumer, Rheologieadditive, Konservierungsmittel, Puffersubstanzen und pH-Regulatoren.

Geeignete Feuchthaltemittel und Lösemittel sind vorzugsweise Glykolether, worunter hier Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl- Propyl-, Butyl- oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether und Glycerinethoxylate mit einem Molekulargewicht von 200 bis 20.000 g/mol.

Angaben zu Molekulargewichten von Polymeren beziehen sich stets auf deren zahlenmittleres Molekulargewicht, sofern im Einzelfall nicht anders angegeben. Molekulargewichte sind per GPC gegen Polyethylenglykol als Standard zu bestimmen.

Weitere geeignete Hilfsstoffe der erfindungsgemäßen wässrigen Pigmentpräparationen sind vorzugsweise wasserlösliche organische oder hydrotrope Substanzen, die gegebenenfalls auch als Lösungsmittel dienen. Besonders geeignet sind beispielsweise Formamid, Harnstoff, Glycerin, Diglycerin und Polyglycerin.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Besonders bevorzugt sind Entschäumer, die aus fein verteilten, natürlichen Wachsen in natürlichen Fettsäureglyceriden oder Fettsäuremethylestern als Lösemittel bestehen und als biobasierte Entschäumer gelten dürfen.

Geeignete weitere Rheologieadditive als Mittel zur Regulierung der Viskosität sind z. B. Stärke- und Cellulosederivate oder pyrogene Kieselsäure.

Topfkonservierer werden zur Stabilisierung der wässrigen Pigmentpräparationen und zur Verhinderung der unkontrollierten Vermehrung von Bakterien, Algen und Pilzen zugesetzt. Geeignete Biozide sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, 2-Amino-2-methyl-1-propanol oder Dimethylaminomethylpropanol. Bevorzugte anorganische Basen sind Natrium-, Kalium-, Lithiumhydroxid oder Ammoniak.

Zur Herstellung der erfindungsgemäßen, wässrigen Pigmentpräparationen benutztes Wasser, Komponente (G), wird vorzugsweise in Form von destilliertem oder entsalztem Wasser eingesetzt. Auch Trinkwasser (Leitungswasser) und/oder Wasser natürlichen Ursprungs kann eingesetzt werden. Wasser ist in der erfindungsgemäßen wässrigen Pigmentpräparation vorzugsweise zu 10 bis 75 Gew.-%, insbesondere ad 100 Gew.-% enthalten.

Die erfindungsgemäßen wässrigen Pigmentpräparationen weisen vorzugsweise eine Viskosität von 10 bis 10.000 mPas, bevorzugt 30 bis 5.000 mPas und besonders bevorzugt 50 bis 3.000 mPas auf, gemessen mit einem Kegel-Platte-Viskosimeter bei einer Scherrate von 1/60 sec⁻¹, z. B. einem Haake Viscometer 550 gemessen.

Die erfindungsgemäßen, wässrigen Pigmentpräparationen sind in jedem Verhältnis mit Wasser mischbar, wobei sich auch mehrere unterschiedliche Präparationen mit Wasser mischen lassen. Sie zeichnen sich gegenüber herkömmlichen Pigmentpräparationen durch eine hervorragende Lagerstabilität und gute rheologische Eigenschaften aus.

Gegenstand der vorliegenden Erfindung ist auch ein Verfahren zur Herstellung der erfindungsgemäßen Pigmentpräparationen, indem man die Komponente (A) in Form von Pulver oder Granulat in Gegenwart von Wasser (G) sowie der Komponenten (B), (C) und gegebenenfalls (D), (E) und (F) in an sich üblicher Weise dispergiert, anschließend gegebenenfalls weiteres Wasser (G) zumischt und die erhaltende wässrige Pigmentdispersion mit Wasser auf die gewünschte Konzentration einstellt. Vorzugsweise werden die flüssigen Komponenten (B), (C), (G) und gegebenenfalls (F) vermischt und homogenisiert, dann die festen, pulverförmigen, granulierten oder schuppenförmigen Komponente (A), (D) und (E) und in die vorgelegte Mischung eingerührt, wobei das Pigment und gegebenenfalls die Füllstoffe angeteigt und vordispergiert werden. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von makromolekularen Materialien aller Art. Besonders eignen sich die erfindungsgemäßen Pigmentpräparation zur Pigmentierung bzw. Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk zur Anwendung kommen.

Eine besondere Eigenschaft der erfindungsgemäßen Pigmentpräparationen ist ihre Verwendung als universale Abtönpasten. Universale Abtönpasten eignen sich sowohl zum Einfärben von wässrigen Farben als auch zum Abtönen von lösemittelhaltigen Lacken. Übliche Dispergiermittel für wässrige Pigmentpräparationen stabilisieren die Pigmente nur in wässrigen, nicht aber in lösemittelhaltigen Systemen. Werden wässrige Pigmentpräparationen zum Einfärben von lösemittelhaltigen Lacken verwendet, kann es zur Agglomeration der Pigmente und zum Aufschwimmen der agglomerierten Pigmente im Lack kommen. Beim Auftragen der Lacke mit Pinsel, Rollen oder durch Sprühapplikation kann es zu Streifigkeit und zu einem unruhigen Farbbild aufgrund von Farbtonunterschieden kommen, weil die Pigmente in der Farbe und während des Trocknungsprozesses flokkulieren, so dass die Farbstärke reduziert wird. Beim Auftrag der eingefärbten Lacke werden die Pigmentagglomerate wieder aufgetrennt, aber unterschiedlich stark, so dass es zu den beobachteten Farbtonunterschieden kommt. Im Labor wird dieses Phänomen im Rubout-Test simuliert, welcher in US-3840383 beschrieben wird.

### Beispiele

### Herstellung der Pigmentpräparation

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert.
Zur Dispergierung werden die flüssigen Komponenten (B), (C) und (F) in einem Mahlbehälter vorgelegt und vermischt werden. Anschließend wird die pulverförmigen Komponenten (A) und gegebenenfalls (D) und (E) zugegeben und mit dem Dissolver vordispergiert.

Die anschließende Feindispergierung erfolgt mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgt. Anschließend wird die gewünschte Pigmentendkonzentration mit entionisiertem Wasser eingestellt, die Mahlkörper abgetrennt und die Pigmentpräparation isoliert.

### Prüfung der Lackkompatibilität und der Farbstärke

Die Pigmentpräparation wird eine Woche bei 60 °C gelagert und visuell beurteilt. Die Viskosität der Pigmentpräparation wird bei 25 °C mit einem Haake Viscometer 550 bei einer Scherrate von 1/60 sec⁻¹ oder bei gut fließfähigen Pigmentpräparationen mit einem Brookfield-Viscometer, Model DV-II mit der Spindel 3 bei 100 UpM gemessen. Zur Bestimmung der Farbstärke und der Kompatibilität werden die Pigmentpräparationen jeweils einer wässrigen Dispersionsweißfarbe und einem mineralölhaltigen Langöl-Alkydlack zugesetzt. Für das Ausprüfen der Farbstärke und Kompatibilität werden je 200 g der abgetönten Farben bestehend aus 92 Gew.-% Grundlack und 8 Gew.-% der Pigmentpräparation in eine Blechdose geben und 60 Sekunden in einem Inkshaker 500 der Fa. Olbrich Know-how, Hemer homogenisiert. Die abgetönten Farben werden nach einem Tag auf einem Prüfkarton mit einer 120 µm Rakel auf einem Filmziehgerät, Modell 509 MC der Fa. Erichsen GmbH, Hemer ausgestrichen. An den trocknenden Farbfilmen wird der Rubout-Test wie in der Schrift US-3840383 beschriebenen Weise durchgeführt.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In vorliegender Anmeldung bedeuten "Teile" Gewichtsteile und Prozentangaben Gewichtsprozente, soweit im Einzelfall nichts anders angegeben ist.

### Beispiele für Pigmentpräparationen mit anorganischen Pigmenten

### Beispiel 1

| | | |
|---|---|---|
| 60,0 | Teile | C.I. Pigment Yellow 42 (Bayferrox^{®} Yellow 3920, Fa. Lanxess, Komponente (A)), |
| 6,0 | Teile | Sojalecithin technischer Qualität (Lecico F 200, Fa. Lecico GmbH, Komponente (B)), |
| 6,0 | Teile | Tallölfettsäureethanolamid umgesetzt mit 20 Mol Ethylenoxid (Dispersogen^{®} MT 200, Fa. Clariant, Komponente (C)), |
| 10,0 | Teile | Glycerin (Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 17,5 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 1350 mPa·s, gemessen mit einem Haake Kegel-Platte-Viskosimeter.

### Beispiel 2 (Vergleichsbeispiel)

| | | |
|---|---|---|
| 60,0 | Teile | C.I. Pigment Yellow 42 (Bayferrox^{®} Yellow 3920, Fa. Lanxess, Komponente (A)), |
| 6,0 | Teile | Sojalecithin technischer Qualität (Lecico F 200, Fa. Lecico GmbH, Komponente (B)), |
| 6,0 | Teile | Oleinsäure umgesetzt mit 6 Mol Ethylenoxid (Genagen^{®} O 060, Fa. Clariant, Komponente (C)), |
| 10,0 | Teile | Glycerin (Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 17,5 | Teile | Wasser (Komponente (G)) |

Wasser und die Additive werden vorgelegt. Bei der Zugabe des Pigmentes wird die Mischung fest.

### Beispiel 3

| | | |
|---|---|---|
| 60,0 | Teile | C.I. Pigment Red 101 (Bayferrox^{®} Red 130, Fa. Lanxess, Komponente (A)), |
| 6,0 | Teile | Sojalecithin technischer Qualität (Lecico F 200, Fa. Lecico GmbH, Komponente (B)), |
| 8,0 | Teile | Tallölfettsäureethanolamid umgesetzt mit 20 Mol Ethylenoxid (Dispersogen^{®} MT 200, Fa. Clariant, Komponente (C)), |
| 10,0 | Teile | Glycerin (Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 15,5 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 850 mPa·s, gemessen mit einem Haake Kegel-Platte-Viskosimeter.

Beispiele für Pigmentpräparationen mit organischen Pigmenten

### Beispiel 4

| | | |
|---|---|---|
| 21,0 | Teile | C.I. Pigment Blue 15:3 (Hostaperm^{®} Blue B2G, Fa. Clariant, Komponente (A)), |
| 2,5 | Teile | Sojalecithin technischer Qualität (Lecico F 200, Fa. Lecico GmbH, Komponente (B)), |
| 6,0 | Teile | Tallölfettsäureethanolamid umgesetzt mit 20 Mol Ethylenoxid (Dispersogen^{®} MT 200, Fa. Clariant, Komponente (C)), |
| 2,0 | Teile | Montmorrillonit-Tonmineralverdicker und Antiabsetzmittel (Ceratofix^{®} VP, Fa. Clariant, Komponente (D)), |
| 18,0 | Teile | Bariumsulfat (Blanc Fix micro, Fa. Rockwood Pigments, Komponente (E)), |
| 10,0 | Teile | Glycerin (Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 40,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 250 mPa·s, gemessen mit einem Brookfield-Viskosimeter mittels Spindel 3 bei 100 UpM.

### Beispiel 5

| | | |
|---|---|---|
| 6,0 | Teile | C.I. Pigment Black 7 (Special Black 4, Fa. Evonik, Komponente (A)), |
| 2,5 | Teile | Sojalecithin technischer Qualität (Lecico F 200, Fa. Lecico GmbH, Komponente (B)), |
| 6,0 | Teile | Tallölfettsäureethanolamid umgesetzt mit 20 Mol Ethylenoxid (Dispersogen^{®} MT 200, Fa. Clariant, Komponente (C)), |
| 1,0 | Teile | Montmorrillonit-Tonmineralverdicker und Antiabsetzmittel (Ceratofix^{®} VP, Fa. Clariant, Komponente (D)), |
| 26,0 | Teile | Bariumsulfat (Blanc Fix micro, Fa. Rockwood Pigments, Komponente (E)), |
| 10,0 | Teile | Glycerin (Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 48,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 320 mPa·s, gemessen mit einem Brookfield-Viskosimeter mittels Spindel 3 bei 100 UpM.

### Beispiel 6

| | | |
|---|---|---|
| 13,0 | Teile | C.I. Pigment Red 112 (Permanent^{®} Red FGR, Fa. Clariant, Komponente (A)), |
| 2,5 | Teile | Sojalecithin technischer Qualität (Lecico F 200, Fa. Lecico GmbH, Komponente (B)), |
| 6,0 | Teile | Tallölfettsäureethanolamid umgesetzt mit 20 Mol Ethylenoxid (Dispersogen^{®} MT200, Fa. Clariant, Komponente (C)), |
| 2,0 | Teile | Montmorrillonit-Tonmineralverdicker und Antiabsetzmittel (Ceratofix^{®} VP, Fa. Clariant, Komponente (D)), |
| 25,0 | Teile | Bariumsulfat (Blanc Fix micro, Fa. Rockwood Pigments, Komponente (E)), |
| 10,0 | Teile | Glycerin (Komponente (F)), |
| 0,3 | Teile | Entschäumer (D-Foam-R C 740, Fa. Clariant, Komponente (F)), |
| 0,2 | Teile | Konservierungsmittel (Nipacide^{®} BSM, Fa. Clariant, Komponente (F)), |
| 41,0 | Teile | Wasser (Komponente (G)) |

Die Pigmentpräparation ist nach einwöchiger Lagerung bei 60 °C flüssig, homogen und schaumfrei. Die Viskosität der Pigmentpräparation beträgt 180 mPa·s, gemessen mit einem Brookfield-Viskosimeter mittels Spindel 3 bei 100 UpM.

## Patentansprüche

1. Wässrige, bindemittelfreie Pigmentpräparationen, enthaltend
(A) 1,0 bis 75,0 Gew.-% mindestens eines organischen oder anorganischen Weiß- oder Buntpigmentes oder eine Mischung verschiedener organischer und anorganischer Weiß- oder Buntpigmente,
(B) 0,01 bis 8,0 Gew.-% mindestens eines Phosphatids der Formel (I), 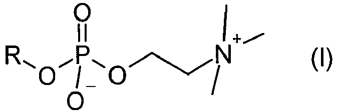 worin
R ein aliphatischer Rest ist, der insgesamt bis zu 50 Atome umfasst, wobei diese ausgewählt sind aus Kohlenstoff-, Wasserstoff- und Sauerstoffatomen, und gegebenenfalls Stickstoff- und Schwefelatomen,
(C) 0,01 bis 12,0 Gew.-% eines Fettsäurealkanolamidethoxylates der Formel (II) 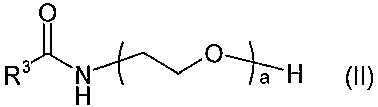 worin
a für eine ganze Zahl von 3 bis 50
R³ für C₇- bis C₂₁-Alkyl oder -Alkenyl stehen,
und
(G) Wasser.

2. Wässrige, bindemittelfreie Pigmentpräparation nach Anspruch 1, worin Komponente (B) ein Phosphatidylcholin der Formel (III) ist 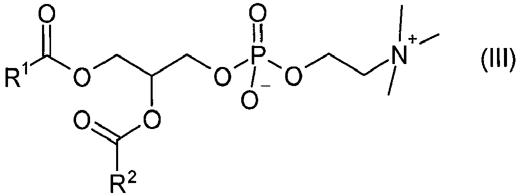 worin
R¹ ein linearer, gesättigter oder ungesättigter aliphatischer C₈ bis C₁₈-Rest und
R² ein linearer, gesättigter oder ungesättigter aliphatischer C₈ bis C₁₈-Rest, gleich oder verschieden von R¹ ist.

3. Wässrige, bindemittelfreie Pigmentpräparation nach Anspruch 1 und 2, worin die Reste R, R¹CO und R²CO Acylreste sind, die von Laurinsäure, Myristinsäure, Palmitinsäure, Stearinsäure, Ölsäure, Linolsäure, Linolensäure, oder deren Mischungen abgeleitet sind.

4. Wässrige, bindemittelfreie Pigmentpräparation nach einem oder mehreren der Ansprüche 1 bis 3, worin die Komponente (C) ethoxylierte Fettsäureethanolamide der Formel (II) ist, 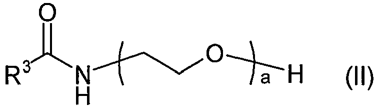 worin a für eine ganze Zahl von 4 bis 50, und R³ für C₁₁₋ bis C₁₉₋Alkyl oder -Alkenyl stehen.

5. Wässrige, bindemittelfreie Pigmentpräparation nach einem oder mehreren der Ansprüche 1 bis 4 enthaltend 1 bis 7 Gew.-% eines Phosphatids der Formel (I) oder (III).

6. Wässrige, bindemittelfreie Pigmentpräparation nach einem oder mehreren der Ansprüche 1 bis 5 enthaltend 1 bis 10 Gew.-% eines ethoxylierten Fettsäureethanolamids der Formel (II).

7. Wässrige, bindemittelfreie Pigmentpräparation nach einem oder mehreren der Ansprüche 1 bis 6, enthaltend 10 bis 75 Gew.-% Wasser.

8. Wässrige, bindemittelfreie Pigmentpräparation nach einem oder mehreren der Ansprüche 1 bis 7, welche eine Viskosität von 10 bis 10.000 mPas, bestimmt mit einem Kegel-Platte Viskosimeter bei einer Scherrate von 1/60 sec⁻¹, aufweist.

9. Wässrige, bindemittelfreie Pigmentpräparationen nach einem oder mehreren der Ansprüche 1 bis 8, enthaltend
(D) 0,01 - 8,0 Gew.-% Tonmineralverdicker auf Basis von natürlichen oder alkalisch aktivierten Montmorrilonit-Schichtsilikatmineralien.

10. Wässrige, bindemittelfreie Pigmentpräparationen nach einem oder mehreren der Ansprüche 1 bis 9, enthaltend
(E) 0,01 - 20,0 Gew.-% anorganische Füllstoffe.

11. Wässrige, bindemittelfreie Pigmentpräparationen nach einem oder mehreren der Ansprüche 1 bis 10, enthaltend
(F) 0,01 bis 30 Gew.-% weitere, für die Herstellung von wässrigen, bindemittelfreien Pigmentpräparationen übliche Hilfsmittel ausgewählt aus Netzmitteln, Feuchthaltemitteln, Lösemitteln, Entschäumern, Rheologieadditiven, Konservierungsmitteln, Puffersubstanzen und pH-Regulatoren.

12. Wässrige, bindemittelfreie Pigmentpräparation nach Anspruch 11, enthaltend bis zu 15 Gew.-% mindestens eines Feuchthalte- oder Lösemittels, ausgewählt aus Glycerin und Glykolethern mit 200 bis 20.000 g/mol zahlenmittlerem Molekulargewicht.

13. Wässrige, bindemittelfreie Pigmentpräparation nach Anspruch 11 und/oder 12, enthaltend bis zu 2 Gew.-% Entschäumer.

14. Wässrige, bindemittelfreie Pigmentpräparation nach einem oder mehreren der Ansprüche 11 bis 13, enthaltend bis zu 1 Gew.-% eines Topfkonservierungsmittels.

15. Verwendung einer wässrigen, bindemittelfreien Pigmentpräparation nach einem oder mehreren der Ansprüche 1 bis 14 zum Einfärben von makromolekularen Materialien, Beschichtungsstoffen, Lacken und Farben, und ihre Verwendung zum Bedrucken von zweidimensionalen Flächengebilden.

## Claims

1. An aqueous, binder-free pigment preparation comprising
(A) 1.0 to 75.0 wt% of at least one organic or inorganic white or chromatic pigment or a mixture of different organic and inorganic white or chromatic pigments,
(B) 0.01 to 8.0 wt% of at least one phosphatide of the formula (I), 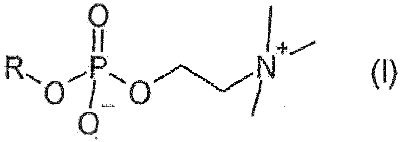 in which
R is an aliphatic radical comprising a total of up to 50 atoms selected from carbon, hydrogen, and oxygen atoms, and optionally nitrogen and sulfur atoms,
(C) 0.01 to 12.0 wt% of a fatty acid alkanolamide ethoxylate of the formula (II) 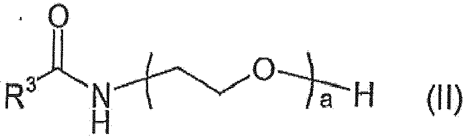 in which
a is an integer from 3 to 50,
R³ is C₇ to C₂₁ alkyl or alkenyl,
and
(G) water.

2. The aqueous, binder-free pigment preparation as claimed in claim 1, wherein component (B) is a phosphatidylcholine of the formula (III) 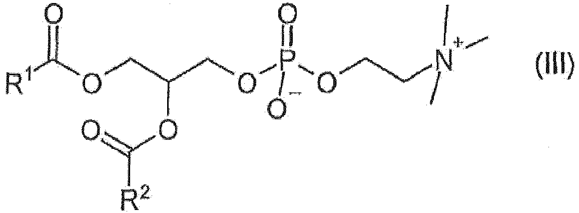 in which
R¹ is a linear, saturated or unsaturated aliphatic C₈ to C₁₈ radical and
R² is a linear, saturated or unsaturated aliphatic C₈ to C₁₈ radical identical to or different from R¹.

3. The aqueous, binder-free pigment preparation as claimed in claim 1 or 2, wherein the radicals R, R¹CO and R²CO are acyl radicals derived from lauric acid, myristic acid, palmitic acid, stearic acid, oleic acid, linoleic acid, linolenic acid, or mixtures thereof.

4. The aqueous, binder-free pigment preparation as claimed in one or more of claims 1 to 3, wherein component (C) is ethoxylated fatty acid ethanolamides of the formula (II), 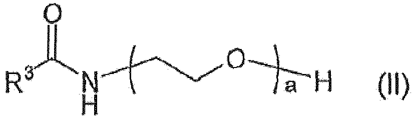 in which a is an integer from 4 to 50 and R³ is C₁₁ to C₁₉ alkyl or alkenyl.

5. The aqueous, binder-free pigment preparation as claimed in one or more of claims 1 to 4, comprising 1 to 7 wt% of a phosphatide of the formula (I) or (III).

6. The aqueous, binder-free pigment preparation as claimed in one or more of claims 1 to 5, comprising 1 to 10 wt% of an ethoxylated fatty acid ethanolamide of the formula (II).

7. The aqueous, binder-free pigment preparation as claimed in one or more of claims 1 to 6, comprising 10 to 75 wt% of water.

8. The aqueous, binder-free pigment preparation as claimed in one or more of claims 1 to 7, having a viscosity of 10 to 10 000 mPas, determined with a cone/plate viscometer at a shear rate of 1/60 sec⁻¹.

9. The aqueous, binder-free pigment preparation as claimed in one or more of claims 1 to 8, comprising
(D) 0.01 - 8.0 wt% of clay mineral thickeners based on natural or alkali-activated montmorillonite phyllosilicate minerals.

10. The aqueous, binder-free pigment preparation as claimed in one or more of claims 1 to 9, comprising
(E) 0.01 - 20.0 wt% of inorganic fillers.

11. The aqueous, binder-free pigment preparation as claimed in one or more of claims 1 to 10, comprising
(F) 0.01 to 30 wt% of other auxiliaries customary for producing aqueous, binder-free pigment preparations and selected from wetting agents, moisture retainers, solvents, defoamers, rheological additives, preservatives, buffer substances, and pH regulators.

12. The aqueous, binder-free pigment preparation as claimed in claim 11, comprising up to 15 wt% of at least one moisture retainer or solvent, selected from glycerol and from glycol ethers having 200 to 20 000 g/mol number-average molecular weight.

13. The aqueous, binder-free pigment preparation as claimed in claim 11 and/or 12, comprising up to 2 wt% of defoamers.

14. The aqueous, binder-free pigment preparation as claimed in one or more of claims 11 to 13, comprising up to 1 wt% of an in-can preservative.

15. The use of an aqueous, binder-free pigment preparation as claimed in one or more of claims 1 to 14 for coloring macromolecular materials, coating materials, paints, and inks, and the use thereof for printing two-dimensional sheetlike structures.

## Revendications

1. Préparations pigmentaires aqueuses sans liant, contenant :
(A) 1,0 à 75,0 % en poids d'au moins un pigment blanc ou coloré organique ou inorganique ou d'un mélange de différents pigments blancs ou colorés organiques et inorganiques,
(B) 0,01 à 8,0 % en poids d'au moins un phosphatide de formule (I) 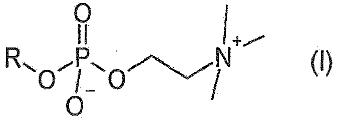 dans laquelle
R représente un radical aliphatique qui comprend au total jusqu'à 50 atomes, choisis parmi des atomes de carbone, d'hydrogène et d'oxygène et éventuellement des atomes d'azote et de soufre,
(C) 0,01 à 12,0 % en poids d'un éthoxylate d'amide d'alcanol et d'acide gras de formule (II) 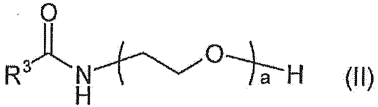 dans laquelle
a représente un nombre entier de 3 à 50
R³ représente alkyle ou alcényle en C₇ à C₂₁,
et
(G) de l'eau.

2. Préparation pigmentaire aqueuse sans liant selon la revendication 1, dans laquelle le composant (B) est une phosphatidylcholine de formule (III) 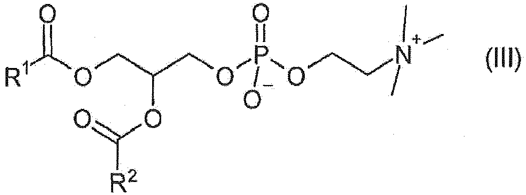 dans laquelle
R¹ représente un radical aliphatique en C₈ à C₁₈ linéaire, saturé ou insaturé et
R² représente un radical aliphatique en C₈ à C₁₈ linéaire, saturé ou insaturé, identique ou différent de R¹.

3. Préparation pigmentaire aqueuse sans liant selon les revendications 1 et 2, dans laquelle les radicaux R, R¹CO et R²CO sont des radicaux acyle qui sont dérivés de l'acide laurique, de l'acide myristique, de l'acide palmitique, de l'acide stéarique, de l'acide oléique, de l'acide linolénique, ou de leurs mélanges.

4. Préparation pigmentaire aqueuse sans liant selon l'une quelconque ou plusieurs des revendications 1 à 3, dans laquelle le composant (C) est constitué par des amides d'éthanol et d'acide gras éthoxylés de formule (II), 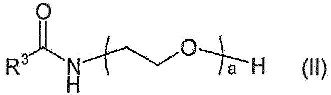 dans laquelle a représente un nombre entier de 4 à 50 et R³ représente alkyle ou alcényle en C₁₁ à C₁₉.

5. Préparation pigmentaire aqueuse sans liant selon une ou plusieurs des revendications 1 à 4, contenant 1 à 7 % en poids d'un phosphatide de formule (I) ou (III).

6. Préparation pigmentaire aqueuse sans liant selon une ou plusieurs des revendications 1 à 5, contenant 1 à 10 % en poids d'un amide d'éthanol et d'acide gras éthoxylé de formule (II).

7. Préparation pigmentaire aqueuse sans liant selon une ou plusieurs des revendications 1 à 6, contenant 10 à 75 % en poids d'eau.

8. Préparation pigmentaire aqueuse sans liant selon une ou plusieurs des revendications 1 à 7, qui présente une viscosité de 10 à 10 000 mPas, déterminée avec un viscosimètre à cône et plaque à un taux de cisaillement de 1/60 s⁻¹.

9. Préparations pigmentaires aqueuses sans liant selon une ou plusieurs des revendications 1 à 8, contenant :
(D) 0,01 à 8,0 % en poids d'un épaississant minéral argileux à base de minéraux phyllosilicatés de montmorillonite naturels ou activés alcaliniquement.

10. Préparations pigmentaires aqueuses sans liant selon une ou plusieurs des revendications 1 à 9, contenant : (E) 0,01 à 20,0 % en poids de charges inorganiques.

11. Préparations pigmentaires aqueuses sans liant selon une ou plusieurs des revendications 1 à 10, contenant :
(F) 0,01 à 30 % en poids d'autres adjuvants usuels pour la fabrication de préparations pigmentaires aqueuses sans liant, choisis parmi les agents mouillants, les agents de rétention de l'humidité, les solvants, les antimousses, les additifs rhéologiques, les conservateurs, les substances tampons et les régulateurs de pH.

12. Préparation pigmentaire aqueuse sans liant selon la revendication 11, contenant jusqu'à 15 % en poids d'au moins un agent de rétention de l'humidité ou un solvant, choisi parmi la glycérine et les éthers de glycol ayant un poids moléculaire moyen en nombre de 200 à 20 000 g/mol.

13. Préparation pigmentaire aqueuse sans liant selon la revendication 11 et/ou 12, contenant jusqu'à 2 % en poids d'antimousses.

14. Préparation pigmentaire aqueuse sans liant selon une ou plusieurs des revendications 11 à 13, contenant jusqu'à 1 % en poids d'un conservateur en pot.

15. Utilisation d'une préparation pigmentaire aqueuse sans liant selon une ou plusieurs des revendications 1 à 14 pour la coloration de matériaux macromoléculaires, d'agents de revêtement, de vernis et de peintures, et son utilisation pour l'impression de structures plates bidimensionnelles.
